# EUROPEAN PATENT SPECIFICATION

(11) **EP 3 548 161 B1**
(45) Date of publication and mention of the grant of the patent: **21.04.2021**
(21) Application number: 17811900.4
(22) Date of filing: 30.11.2017
(51) Int. Cl.: B01D 53/22, B01D 46/00, B01D 53/26, B60T 17/00

(54) **AN AIR PROCESSING ASSEMBLY COMPRISING A PTFE BASED OLEOPHOBIC MEMBRANE AND METHOD FOR DRYING COMPRESSED AIR FOR A VEHICLE**
LUFTBEHANDLUNGSANLAGE MIT EINER OLEOPHOBISCHEN PTFE-MEMBRAN UND VERFAHREN ZUR TROCKNUNG VON DRUCKLUFT FÜR EIN FAHRZEUG
ENSEMBLE DE TRAITEMENT D'AIR COMPRENANT UNE MEMBRANE OLÉOPHOBE À BASE DE PTFE ET PROCÉDÉ DE SÉCHAGE D'AIR COMPRIMÉ POUR UN VÉHICULE

(30) Priority: 05.12.2016 IN 201641041436
(43) Date of publication of application: 09.10.2019
(73) Proprietor: Volvo Truck Corporation, 405 08 Göteborg (SE)
(72) Inventor: MANICKAM, Kumaravel, Bangalore 56016 (IN); KANNIRAJ, Nageswaran, Tiruvarur 610001 (IN); KUNASEKARAN, Karthikeyan, Bangalore 560075 (IN)
(74) Representative: Kransell & Wennborg KB
(86) International application number: PCT/EP2017/081078
(87) International publication number: WO 2018/104152

(56) References cited:
- WO-A1-01/52973
- WO-A2-2004/103509
- US-A1- 2007 017 370
- US-A1- 2010 024 898
- US-B1- 6 410 084
- US-B2- 6 951 581

## Description

### TECHNICAL FIELD

The present disclosure relates to an air processing assembly for a vehicle, including a filter element comprising a PTFE based oleophobic membrane. The present disclosure also relates to a corresponding method for drying compressed air.

### BACKGROUND

Trucks, buses, and related heavy-duty vehicles typically employ an air brake system in which compressed air from an air compressor, or storage reservoir, is applied and released from brake chambers associated with the wheels. The air is typically supplied to an air dryer, then to an air tank, and then to the air brakes. The air dryer is needed to remove water from the air brake lines and hence prevent problems of brake line freeze in winter, as well as other damage caused by water in the lines.

In a general implementation the air dryer typically use a desiccant to absorb the water. While desiccant works well initially, it loses its absorption capability with time and becomes less effective. Furthermore, there is some oil in the air from the compressor, whereby the desiccant in some situation may become coated with oil and further loses its absorption capability.

WO2001052973 tries to overcome the above-mentioned problems by arranging an oil filter adjacent an inlet for removing oil vapor from the compressed air prior to the air passing through the desiccant material, where the oil filter is formed from a layered fiber or fibrous mat. Even though WO2001052973 provides an interesting approach to reducing the amount of oil received at the desiccant, the suggested choice of material in regards to the oil filter will, after time, greatly reduce a an air pressure of the compressed air.

Accordingly, it would be desirable to provide further enhancements for improving the reliability of an air dryer/processing assembly that results in greater lifetime of the components comprised with the assembly by protecting against the harmful effects of liquid contaminants, such as oil vapor.

### SUMMARY

According to an aspect of the present disclosure, the above is at least partly alleviated by an air processing assembly for a compressed air system of a vehicle according to claim 1, the compressed air system having a compressor for supplying a compressed air stream, wherein the air processing assembly comprises a housing, an inlet provided at the housing and configured to receive the compressed air stream from the compressor, a first filter element mounted within the housing and arranged to filter the compressed air stream received at the inlet, and an outlet provided at the housing and configured to release the compressed air stream from the air processing assembly out from the housing, wherein the filter first element comprises a PTFE based oleophobic membrane adapted to inhibit the passage of liquid contaminants comprised with the compressed air stream.

In accordance to the present disclosure, the first filter element comprises an PTFE based oleophobic membrane, preferably of a hydrophobic type, arranged to inhibit the passage of liquid contaminants comprised with the compressed air stream. PTFE is also referred to a Polytetrafluoroethylene. An advantage of using such a filter element is that this type of filter element is less affected by liquid contaminants as compared to e.g. filter element comprising woven filter media as is presented in accordance to prior-art, when it comes to accumulation of the contaminants at the surface of the filter element. Thus, by means of the proposed air processing assembly an in comparison less amount of liquid contaminants, such as the previous mentioned oil vapor.

In a preferred embodiment, the PTFE based membrane is of an expanded oleophobic type, defined as an ePTFE membrane (i.e. expanded Polytetrafluoroethylene). An advantage of using a filter element of the expanded oleophobic type as compared to the "non-expanded" oleophobic type of first filter element is that an expanded oleophobic type filter element may be specifically arranged to have a customized expansion ratio that will help to balance any possible pressure reduction in the air processing assembly. This is made possible since the expanded oleophobic type first filter element may be provided with more even micro pore sizes as compared to the non-expanded oleophobic type of filter element.

As mentioned above, the expanded oleophobic type filter element is arranged as a membrane, for example manufactured from a modified acrylic copolymer cast on a thin, non-woven polyester support that is treated with an oleophobic/hydrophobic substance or a modified polyethersulfone polymer cast on a non-woven polyester support treated with an oleophobic/hydrophobic substance. Examples of such oleophobic/hydrophobic substances include fluoropolymers such as a fluorosulfone (e.g., polyfluorosulfone acrylate), a polyvinylidene fluoride, a polytetrafluoroethylene PTFE, and most preferably an Expanded Polytetrafluoroethylene (ePTFE). In a specific embodiment, a porosity of the membrane is at least 80%. In an embodiment it may be possible to adapt the (e.g. expanded) PTFE based membrane to have a thickness between 3 - 25 mm, depending on porosity and a desired durability.

The air processing assembly of the present invention further comprises an air dryer mounted within the housing, the air dryer arranged to receive the compressed air stream from the first filter element. In line with the above discussion, the air dryer preferably contains a desiccant material for drying the compressed air stream. Different desiccant materials are known for use in line with air dryers for compressed air brake systems and typically comprises beads which together define a bed through which compressed air flows and from which moisture is removed and entrained on the beads. A reverse or purge airflow through the desiccant bed removes the moisture from the beads and exhausts to atmosphere to periodically regenerate the air dryer for subsequent use. It is advantageous to arrange the first filter element upstream of the inlet and downstream of the air dryer.

It is preferred to arrange the first filter element such that all of the compressed air stream must pass through the first filter element before being received at the air dryer. Accordingly, all of the compressed air stream is allowed to pass the first filter element before being received at the desiccant material of the air dryer, ensuring the desired increased lifetime, as compared to prior art solutions, is possible to achieve.

In a possible embodiment of the present disclosure, the air processing assembly further comprises a second filter element, the second filter element arranged upstream the first filter element. Thus, a further reduction in any e.g. oil vapor being received at the air dryer is achieved. Preferably, the second filter element is at least partly formed from a thermoplastic material, such as at least one of a polypropylene or a polyphthalamide material.

It may in some embodiments be desirable to arrange the first filter element at an angled position relative to horizontal or vertical. Such a configuration has shown to, in some embodiments, allows any e.g. oil that is collected on a surface of the first filter element to in a further improved way migrate away from the first filter element, thereby ensuring that no pressure reduction is introduced due to oil particles resting at the first filter element. In addition, by arranging the first filter element at an angled position it may in some embodiments be possible to achieve an increased surface area, thereby further improving removal of the mentioned oil vapor. The first filter element may in some embodiments be angled up to +/- 45 degrees relative the vertical plane.

In a possible embodiment of the present disclosure, the first filter element is arranged to have a truncated cone shape with trapezoidal cross section. Such a configuration may allow for an even further increase surface area, again ensuring that a minimal amount of pressure reduction is introduces.

In accordance to a preferred embodiment of the present disclosure, the air processing assembly as presented above forms part of an air processing system for a vehicle, further comprising a compressor for supplying a compresses air stream and a first conduit connecting the compressor to the inlet of the air processing assembly. The air processing system preferably further comprises an air reservoir for restoring the compressed air stream, and a second conduit connecting the outlet of the air processing assembly to the air reservoir.

The air processing system is preferably arranged in a vehicle, such as a heavy-duty vehicle, specifically in relation to a truck, a bus or any form of construction equipment, where the air processing system preferably is connected to an air brake system comprised with the vehicle.

According to another aspect of the present disclosure there is provided a method of drying compressed air in a compressed air system of a vehicle according to claim 15, the compressed air system having a compressor for supplying a compressed air stream, wherein the method comprises the steps of passing the compressed air stream through a first filter element, and subsequently passing the compressed air stream through an air dryer, wherein the filter first element comprises a PTFE based oleophobic membrane. This aspect of the present disclosure provides similar advantages as discussed above in relation to the previous aspect of the present disclosure.

Additionally, a filter element for an air processing assembly comprised with a compressed air system of a vehicle is described (not according to the present invention), wherein the first filter element is adapted to be installed within an air processing assembly and upstream of an inlet provided at a housing of the air processing assembly, wherein the filter first element comprises a PTFE based oleophobic membrane. Also this aspect of the present disclosure provides similar advantages as discussed above in relation to the previous aspects of the present disclosure.

Further advantages and advantageous features of the present disclosure are disclosed in the following description and in the dependent claims.

### BRIEF DESCRIPTION OF THE DRAWINGS

With reference to the appended drawings, below follows a more detailed description of embodiments of the present disclosure cited as examples.

In the drawings:
Figs. 1A illustrates a truck and 1B a bus in which the air processing system according to the present disclosure may be incorporated;
Fig. 2 shows an exemplary implementation of an air processing system;
Figs. 3A - 3D provides detailed illustrations of different embodiments of air processing arrangement to be comprised with the air processing system shown in Fig. 2, and

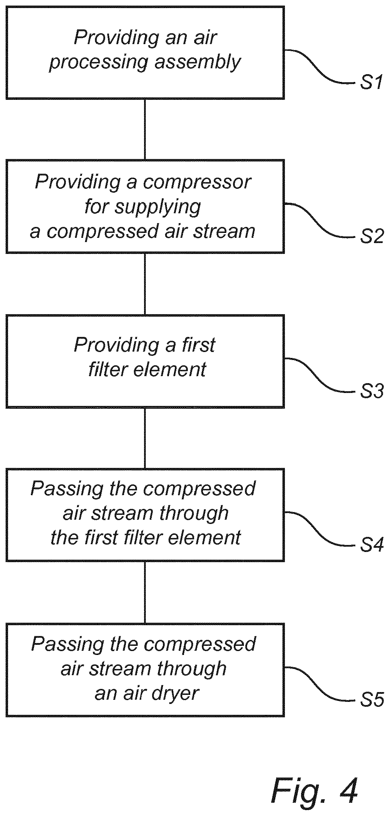

Fig. 4 is a flow chart illustrating a method of drying compressed air in a compressed air system such as shown in Fig. 2.

### DETAILED DESCRIPTION OF EXAMPLE EMBODIMENTS OF THE INVENTION

The present disclosure will now be described more fully hereinafter with reference to the accompanying drawings, in which currently preferred embodiments of the present disclosure are shown. This disclosure may, however, be embodied in many different forms within the scope of the claims and should not be construed as limited to the embodiments set forth herein; rather, these embodiments are provided for thoroughness and completeness, and fully convey the scope of the disclosure to the skilled addressee. Like reference characters refer to like elements throughout.

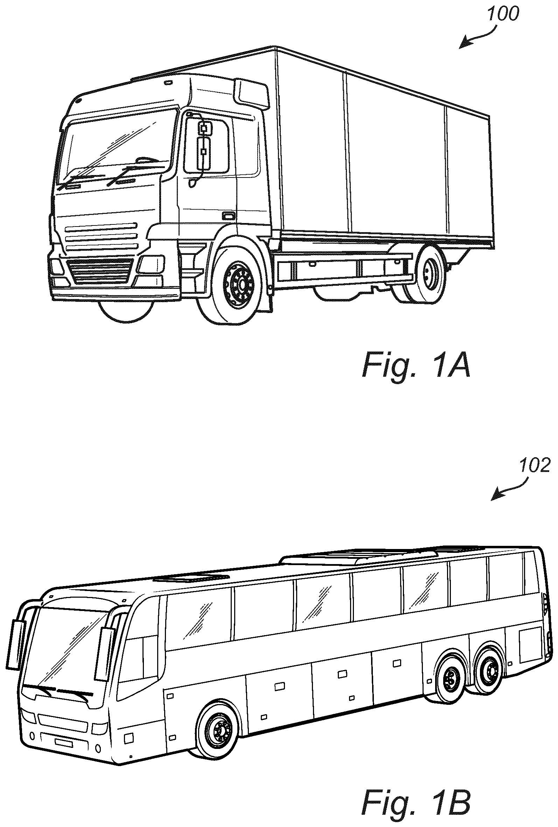

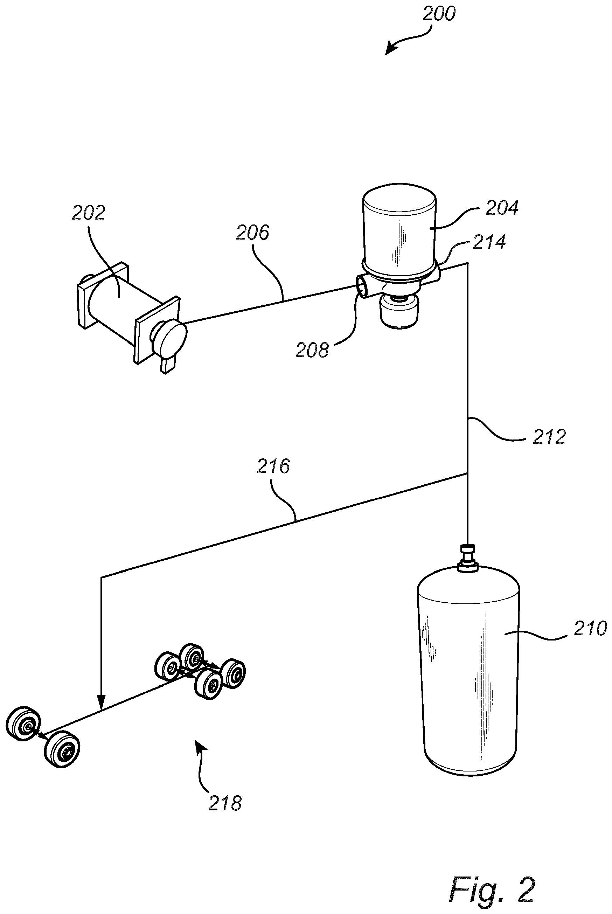

Referring now to the drawings and to Figs. 1A, 1B and 2 in particular, there is in Fig. 1A depicted an exemplary vehicle, here illustrated as a truck 100, in which the air processing system according to the present disclosure may be incorporated. The air processing system may of course be implemented, possibly in a slightly different way, in a bus 102 as shown in Fig. 1B, a car, etc. The vehicle may for example be one of an electric or hybrid vehicle, or possibly a gas, gasoline or diesel vehicle. The vehicle comprises an electric machine (in case of being an electric or hybrid vehicle) or an engine (such as an internal combustion engine in case of being a gas, gasoline or diesel vehicle).

Fig. 2 shows an exemplary implementation of an air processing system 200, comprising an air compressor 202 for supplying a compressed air stream, an air processing assembly 204, and a first conduit 206 connecting the compressor to an inlet 208 of the air processing assembly 204. The air processing system 200 further comprises an air reservoir 210 for storing and/or restoring the compressed air stream, and a second conduit 212 connecting an outlet 214 of the air processing assembly 204 to the air reservoir 210. In addition, a third conduit 216 provides a connection to a brake system 218 comprised with the vehicle 100,102. In an embodiment of the present disclosure, it may be possible to arrange the air compressor 202 to generate a compressed air pressure within an exemplary range of 4,83 bar to 15,17 bar (70 psi to 220 psi).

In operation, the compressed air stream is communicated from the compressor 202 through the first conduit 206 and the inlet 208 in to the air processing assembly 204. Oil particles and moisture comprised with the compressed air stream is removed by the air processing assembly 204. The compressed air stream is then communicated out of air processing assembly 204 through the outlet 214 and the second conduit 212 to the air reservoir 210.

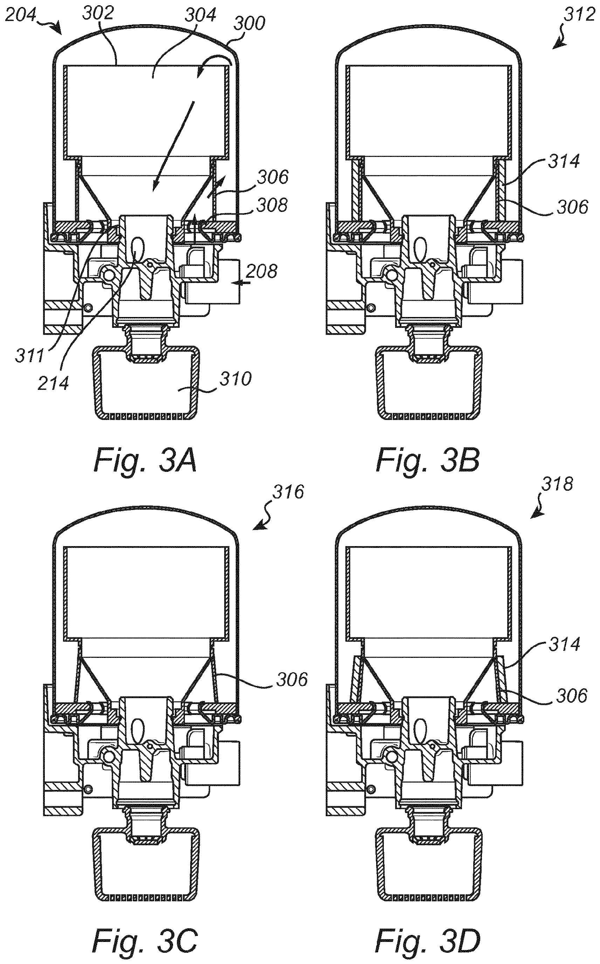

Turning now to Fig. 3A, which illustrates a first possible embodiment of the air processing assembly 204 according to the present disclosure. Further to the discussion in relation to Fig. 2, the air processing assembly 204 comprises a desiccant housing 300 inside of which an air dryer 302 is provided, holding the desiccant material 304. In the embodiment shown in Fig. 3A, a first filter element in the form of an oleophobic PTFE membrane 306, preferably an oleophobic ePTFE membrane is arranged parallel to a vertical plane (i.e. perpendicular to a horizontal plane). In addition, to deal with particulate matter the air processing assembly 204 may be provided with a pre-filter 308 situated intermediate the inlet 208 and the compressor 202. The air processing assembly 204 further comprises a sump 310, arranged at the bottom of the air processing assembly 204. The sump is provided to receive the liquid containments (e.g. oil particles) removed from the compressed air stream entering the air processing assembly 204. Under certain operating conditions of the air processing assembly 204, the sump 310 is able to drain through a bypass valve (not shown).

Furthermore, the desiccant material is a well-known material used in air dryers for compressed air brake systems and typically comprises beads, which together define a bed through which compressed air flows and from which moisture is removed and entrained on the beads. A reverse or purge airflow through the desiccant material removes the moisture from the beads and exhausts to atmosphere to periodically regenerate the air dryer for subsequent use.

However, although the desiccant material can be purged an indefinite number of times, it eventually can no longer efficiently dry compressed air. At this time, the desiccant material 304 must be replaced. According to the invention, the air dryer 302 of the air processing assembly 204 may be removed, e.g. by rotating the air dryer 302 relative to a base portion part 311 of the air processing assembly 204. A new air dryer 302 can then be installed by reversing the process. The air dryer 302 containing the depleted desiccant material 304 can then be returned to the factory or rebuilder, which can replace the desiccant with new desiccant so that the air dryer 302 may be reused an infinite number of times.

During operation of the air processing assembly 204, the compressed air will enter through the inlet 208, pass through the optional pre-filter 308, then through the oleophobic PTFE membrane 306, through the desiccant material 304, and then out through the outlet 214. As has been explained above, the oleophobic PTFE membrane 306 is preferably arranged such that all of the compressed air stream entering through the inlet 208 must pass the oleophobic PTFE membrane 306 before being received by the desiccant material 304. In a possible embodiment, the compressed air stream may for example flow on an inside of the desiccant housing 300 and then enter into the air dryer 302 in a top section thereof before reaching the desiccant material 304. Once the compressed air stream has passed through the desiccant material 304 it will exit through the outlet 214. The exemplary path of the compressed air stream from the inlet 208 to the outlet 214 is indicated in Fig. 3A by arrows. The liquid containments removed by the air processing assembly 204 will, as mentioned above, enter the sump 310 through a passage (not explicitly shown).

An alternative configuration of an air processing assembly 312 is illustrated in Fig. 3B. The air processing assembly 312 additionally, in comparison to the air processing assembly 204, comprises a second filter element 314. The second filter element 314 is preferably at least partly formed from a thermoplastic material, such as at least one of a polypropylene (PP) or a polyphthalamide (PPA). The second filter element 314 is provided to further improve the removal of any oil particles from the compressed air stream. Thus, during operation of the air processing assembly 312, the compressed air will additionally have to pass the second filter element 314 before being received by the desiccant material 304.

Fig. 3C provides an additional alternative air processing assembly 316, according to a third exemplary embodiment. In this embodiment, having similarities to the embodiment shown in Fig. 3A, lacking the inclusion of the second filter element 314. However, the oleophobic PTFE membrane 306 is differently positioned at an angled positioned. Accordingly, by such an implementation, the oleophobic PTFE membrane 306 will be angled relative to horizontal or vertical plane, such that oil particles (i.e.) collected at the oleophobic PTFE membrane 306 is removed from a surface of the oleophobic PTFE membrane 306 via gravity. Accordingly, once liquid contaminants are formed at the surface of the oleophobic PTFE membrane 306, they may be drained of under gravity from the oleophobic PTFE membrane 306, whereby the angled arrangement will allow for a further improvement of the drainage.

It may in some embodiments be possible to arrange the oleophobic PTFE membrane 306 to be formed as a truncated cone shape with trapezoidal cross section. Such an implementation may possibly allow for a further increase of the surface area of the oleophobic PTFE membrane 306, wherein a possible reduction in pressure in regards to the compressed air stream may be countered.

Turning now to Fig. 3D, where a still further (fourth) alternative embodiment of an air processing assembly 318 is shown. The implementation shown in Fig. 3D may be seen as a combination of the features shown in regards to the second and the third embodiment (i.e. Figs. 3B and 3C), wherein the oleophobic PTFE membrane 306 is arranged in an angled (slanted) position to make use of the gravity drainage possibility as discussed above. However, in Fig. 3D the second filter element 314 is again introduced. As in regards to the above discussion, the compressed air stream will thus first pass through the oleophobic PTFE membrane 306 before passing through the second filter element 314

To summarize, the present disclosure relates to an air processing assembly 204,312,318 for a compressed air system 200 of a vehicle 100,102, the compressed air system 200 having a compressor 202 for supplying a compressed air stream, wherein the air processing assembly 204,312,318 comprises a housing 300, an inlet 208 provided at the housing 300 and configured to receive the compressed air stream from the compressor 202, a first filter element mounted within the housing 300 and arranged to filter the compressed air stream received at the inlet 208, and an outlet 214 provided at the housing 300 and configured to release the compressed air stream from the air processing assembly 204,312,318 out from the housing 300, wherein the filter first element comprises an oleophobic PTFE membrane 306 adapted to inhibit the passage of liquid contaminants comprised with the compressed air stream.

An advantage of using such a filter element is that this type of filter element is less affected by liquid contaminants as compared to e.g. filter element comprising woven filter media as is presented in accordance to prior-art, when it comes to accumulation of the contaminants at the surface of the filter element. Thus, by means of the proposed air processing assembly an in comparison less amount of liquid contaminants, such as the previous mentioned oil vapor.

In an embodiment, there is provided a method of drying compressed air in a compressed air system of a vehicle, the compressed air system having a compressor for supplying a compressed air stream, wherein the method comprises the steps of providing, S1, the air processing assembly 204, 312, 316, 318, providing, S2, the compressor 202 for supplying the compressed air stream, providing the first filter element 306, passing, S4, the compressed air stream through the first filter element 306, and subsequently, S5, passing the compressed air stream through the air dryer 302, wherein the first filter element 306 comprises a PTFE based oleophobic membrane.

Although the figures may show a specific order of method steps, the order of the steps may differ from what is depicted. In addition, two or more steps may be performed concurrently or with partial concurrence. Such variation will depend on the hardware systems chosen and on designer choice. All such variations are within the scope of the disclosure. Likewise, different similar implementations could be accomplished with different techniques to accomplish the various steps of the present disclosure. Additionally, even though the disclosure has been described with reference to specific exemplifying embodiments thereof, many different alterations, modifications and the like will become apparent for those skilled in the art.

Variations to the disclosed embodiments can be understood and effected by the skilled addressee in practicing the claimed disclosure, from a study of the drawings, the disclosure, and the appended claims. Furthermore, in the claims, the word "comprising" does not exclude other elements or steps, and the indefinite article "a" or "an" does not exclude a plurality.

## Claims

1. An air processing assembly (204,312,318) for a compressed air system (200) of a vehicle (100,102), the compressed air system (200) having a compressor (202) for supplying a compressed air stream, wherein the air processing assembly (204,312,318) comprises:
- a housing (300);
- an inlet (208) provided at the housing (300) and configured to receive the compressed air stream from the compressor (202);
- a first filter element (306) mounted within the housing (300) and arranged to filter the compressed air stream received at the inlet (208),
air dryer (302) mounted within the housing (300), the air dryer (302) arranged to receive the compressed air stream from the first filter element (306), and
- an outlet (214) provided at the housing (300) and configured to release the compressed air stream from the air processing assembly (204,312,318) out from the housing (300),
**characterized in that** the filter first element (306) comprises a PTFE based oleophobic membrane adapted to inhibit the passage of liquid contaminants comprised with the compressed air stream.

2. The air processing assembly (204,312,318) according to claim 1, wherein the first filter element (306) is positioned such that all of the compressed air stream must pass through the first filter element (306) before being received at the air dryer (302).

3. The air processing assembly (204,312,318) according to any one of the preceding claims, wherein the air dryer (302) contains a desiccant material (304) for drying the compressed air stream.

4. The air processing assembly (204,312,318) according to any one of the preceding claims, further comprising a second filter element (314), the second filter element (314) is arranged downstream the first filter element (306).

5. The air processing assembly (204,312,318) according to claim 4, wherein the second filter element (314) is at least partly formed from a thermoplastic material.

6. The air processing assembly (204,312,318) according to claim 5, wherein the thermoplastic material is at least one of a polypropylene or a polyphthalamide material.

7. The air processing assembly (204,312,318) according to any one of the preceding claims, wherein the PTFE based oleophobic membrane is an ePTFE based oleophobic membrane.

8. The air processing assembly (204,312,318) according to claim 7, wherein a porosity of the ePTFE based membrane is at least 50%.

9. The air processing assembly (204,312,318) according to any one of the preceding claims, wherein the housing (300) has an elongated shape having distally opposite ends, the inlet (308) being arranged at a first distal end of the housing (300).

10. The air processing assembly (204,312,318) according to any one of the preceding claims, wherein the first filter element is arranged to have a truncated cone shape with trapezoidal cross section.

11. The air processing assembly (204,312,318) according to any one of claims 1 - 9, wherein the first filter element (306) is arranged at an angle relative to horizontal or vertical plane, such that liquids collected at the first filter element (306) is removed from a surface of the first filter element via gravity.

12. An air processing system (200) for a vehicle, comprising:
- a compressor (202) for supplying a compressed air stream;
- an air processing assembly (204,312,318) according to any one of the preceding claims, and
- a first conduit (206) connecting the compressor (202) to the inlet (208) of the air processing assembly (204,312,318).

13. The air processing system (200) according to claim 12, further comprising:
- an air reservoir (210) for restoring the compressed air stream, and
- a second conduit (216) connecting the outlet of the air processing assembly (204,312,318) to the air reservoir (210).

14. A vehicle (100,102) comprising an air processing system (200) according to any one of claims 12 and 13.

15. A method of drying compressed air in a compressed air system (200) of a vehicle (100,102) using an air processing assembly (204,312,318) according to any one of claims 1 - 11, wherein the method comprises the steps of:
- passing (S4) the compressed air stream through the first filter element (306), and
- subsequently passing (S5) the compressed air stream through the air dryer (302).

## Patentansprüche

1. Luftbehandlungsanlage (204, 312, 318) für ein Druckluftsystem (200) eines Fahrzeugs (100, 102), wobei das Druckluftsystem (200) einen Kompressor (202) zum Zuführen eines Druckluftstroms aufweist, wobei die Luftbehandlungsanlage (204, 312, 318) umfasst:
- ein Gehäuse (300);
- einen Einlass (208), der an dem Gehäuse (300) vorgesehen und konfiguriert ist, um den Druckluftstrom vom Kompressor (202) zu empfangen;
- ein erstes Filterelement (306), das innerhalb des Gehäuses (300) montiert und angeordnet ist, um den am Einlass (208) empfangenen Druckluftstrom zu filtern,
Lufttrockner (302), der innerhalb des Gehäuses (300) montiert ist, wobei der Lufttrockner (302) angeordnet ist, um den Druckluftstrom von dem ersten Filterelement (306) zu empfangen, und
- einen Auslass (214), der an dem Gehäuse (300) vorgesehen und konfiguriert ist, um den Druckluftstrom von der Luftbehandlungsanlage (204, 312, 318) aus dem Gehäuse (300) freizugeben,
**dadurch gekennzeichnet, dass** das erste Filterelement (306) eine oleophobische PTFE-Membran umfasst, die angepasst ist, den Durchgang von flüssigen Verunreinigungen, die in dem Druckluftstrom enthalten sind, zu verhindern.

2. Luftbehandlungsanlage (204, 312, 318) nach Anspruch 1, wobei das erste Filterelement (306) so positioniert ist, dass der gesamte Druckluftstrom durch das erste Filterelement (306) hindurchgehen muss, bevor er am Lufttrockner (302) ankommt.

3. Luftbehandlungsanlage (204, 312, 318) nach einem der vorhergehenden Ansprüche, wobei der Lufttrockner (302) ein Trocknungsmaterial (304) zum Trocknen des Druckluftstroms enthält.

4. Luftbehandlungsanlage (204, 312, 318) nach einem der vorhergehenden Ansprüche, ferner umfassend ein zweites Filterelement (314), wobei das zweite Filterelement (314) dem ersten Filterelement (306) nachgeordnet ist.

5. Luftbehandlungsanlage (204, 312, 318) nach Anspruch 4, wobei das zweite Filterelement (314) zumindest teilweise aus einem thermoplastischen Material gebildet ist.

6. Luftbehandlungsanlage (204, 312, 318) nach Anspruch 5, wobei das thermoplastische Material mindestens eines aus einem Polypropylen- oder einem Polyphthalamid-Material ist.

7. Luftbehandlungsanlage (204, 312, 318) nach einem der vorhergehenden Ansprüche, wobei die oleophobische PTFE-Membran eine oleophobische ePTFE-Membran ist.

8. Luftbehandlungsanlage (204, 312, 318) nach Anspruch 7, wobei eine Porosität der oleophobischen ePTFE-Membran mindestens 50 % beträgt.

9. Luftbehandlungsanlage (204, 312, 318) nach einem der vorhergehenden Ansprüche, wobei das Gehäuse (300) eine längliche Form mit distal gegenüberliegenden Enden aufweist, wobei der Einlass (308) an einem ersten distalen Ende des Gehäuses (300) angeordnet ist.

10. Luftbehandlungsanlage (204, 312, 318) nach einem der vorhergehenden Ansprüche, wobei das erste Filterelement so angeordnet ist, dass es eine Kegelstumpfform mit trapezförmigem Querschnitt aufweist.

11. Luftbehandlungsanlage (204, 312, 318) nach einem der Ansprüche 1 - 9, wobei das erste Filterelement (306) in einem Winkel relativ zu einer horizontalen oder vertikalen Ebene angeordnet ist, so dass am ersten Filterelement (306) gesammelte Flüssigkeiten durch Schwerkraft von einer Oberfläche des ersten Filterelements entfernt werden.

12. Luftbehandlungssystem (200) für ein Fahrzeug, umfassend:
- einen Kompressor (202) zur Bereitstellung eines Druckluftstroms;
- eine Luftbehandlungsanlage (204, 312, 318) nach einem der vorhergehenden Ansprüche, und
- eine erste Leitung (206), die den Kompressor (202) mit dem Einlass (208) der Luftbehandlungsanlage (204, 312, 318) verbindet.

13. Luftbehandlungssystem (200) nach Anspruch 12, ferner umfassend:
- ein Luftreservoir (210) zur Wiederherstellung des Druckluftstroms, und
- eine zweite Leitung (216), die den Auslass der Luftbehandlungsanlage (204, 312, 318) mit dem Luftreservoir (210) verbindet.

14. Fahrzeug (100, 102) umfassend ein Luftbehandlungssystem (200) nach einem der Ansprüche 12 und 13.

15. Verfahren zur Trocknung von Druckluft in einem Druckluftsystem (200) eines Fahrzeugs (100, 102) mit einer Luftbehandlungsanlage (204, 312, 318) nach einem der Ansprüche 1 - 11, wobei das Verfahren die folgenden Schritte umfasst:
- Durchleiten (S4) des Druckluftstroms durch das erste Filterelement (306), und
- anschließendes Durchleiten (S5) des Druckluftstroms durch den Lufttrockner (302).

## Revendications

1. Ensemble de traitement d'air (204, 312, 318) pour système d'air comprimé (200) d'un véhicule (100, 102), le système d'air comprimé (200) comportant un compresseur (202) pour fournir un flux d'air comprimé, l'ensemble de traitement d'air (204, 312, 318) comprenant :
- un boîtier (300) ;
- une admission (208) prévue au niveau du boîtier (300) et conçue pour recevoir le flux d'air comprimé en provenance du compresseur (202) ;
- un premier élément filtrant (306) monté dans le boîtier (300) pour filtrer le flux d'air comprimé reçu au niveau de l'admission (208),
un sécheur d'air (302) monté dans le boîtier (300), le sécheur d'air (302) étant conçu pour recevoir le flux d'air comprimé en provenance du premier élément filtrant (306), et
- une évacuation (214) prévue au niveau du boîtier (300) et conçue pour relâcher le flux d'air comprimé en provenance de l'ensemble de traitement d'air (204, 312, 318) hors du boîtier (300),
**caractérisé en ce que** le premier élément filtrant (306) comprend une membrane oléophobe à base de PTFE apte à empêcher le passage de contaminants liquides contenus dans le flux d'air comprimé.

2. Ensemble de traitement d'air (204, 312, 318) selon la revendication 1, dans lequel le premier élément filtrant (306) est positionné de manière à ce que tout le flux d'air comprimé doive passer à travers le premier élément filtrant (306) avant d'être reçu au niveau du sécheur d'air (302).

3. Ensemble de traitement d'air (204, 312, 318) selon l'une quelconque des revendications précédentes, dans lequel le sécheur d'air (302) comprend un matériau dessicateur (304) pour sécher le flux d'air comprimé.

4. Ensemble de traitement d'air (204, 312, 318) selon l'une quelconque des revendications précédentes, comprenant en outre un second élément filtrant (314), le second élément filtrant (314) étant disposé en aval du premier élément filtrant (306).

5. Ensemble de traitement d'air (204, 312, 318) selon la revendication 4, dans lequel le second élément filtrant (314) est au moins partiellement formé d'un matériau thermoplastique.

6. Ensemble de traitement d'air (204, 312, 318) selon la revendication 5, dans lequel le matériau thermoplastique est au moins un matériau parmi un polypropylène ou un polyphtalamide.

7. Ensemble de traitement d'air (204, 312, 318) selon l'une quelconque des revendications précédentes, dans lequel la membrane oléophobe à base de PTFE est une membrane oléophobe à base d'ePTFE.

8. Ensemble de traitement d'air (204, 312, 318) selon la revendication 7, dans lequel une porosité de la membrane à base d'ePTFE est d'au moins 50 %.

9. Ensemble de traitement d'air (204, 312, 318) selon l'une quelconque des revendications précédentes, dans lequel le boîtier (300) a une forme allongée ayant des extrémités distalement opposées, l'admission (308) étant disposée à une première extrémité distale du boîtier (300).

10. Ensemble de traitement d'air (204, 312, 318) selon l'une quelconque des revendications précédentes, dans lequel le premier élément filtrant est conçu pour avoir une forme de cône tronqué avec une section transversale trapézoïdale.

11. Ensemble de traitement d'air (204, 312, 318) selon l'une quelconque des revendications 1 à 9, dans lequel le premier élément filtrant (306) est disposé en angle par rapport à un plan horizontal ou vertical, de sorte que du liquide collecté au niveau du premier élément filtrant (306) est éliminé d'une surface du premier élément filtrant par gravité.

12. Système de traitement d'air (200) pour véhicules, comprenant :
- un compresseur (202) pour fournir un flux d'air comprimé ;
- un ensemble de traitement d'air (204, 312, 318) selon l'une quelconque des revendications précédentes, et
- une première conduite (206) connectant le compresseur (202) à l'admission (208) de l'ensemble de traitement d'air (204, 312, 318).

13. Système de traitement d'air (200) selon la revendication 12, comprenant en outre :
- un réservoir d'air (210) pour restaurer le flux d'air comprimé, et
- une seconde conduite (216) connectant l'évacuation de l'ensemble de traitement d'air (204, 312, 318) au réservoir d'air (210).

14. Véhicule (100, 102) comprenant un système de traitement d'air (200) selon l'une quelconque des revendications 12 et 13.

15. Procédé de séchage d'air comprimé dans un système d'air comprimé (200) d'un véhicule (100, 102) utilisant un ensemble de traitement d'air (204, 312, 318) selon l'une quelconque des revendications 1 à 11, ce procédé comprenant les étapes suivantes :
- passage (S4) du flux d'air comprimé à travers le premier élément filtrant (306), et
- ensuite, passage (S5) du flux d'air comprimé à travers le sécheur d'air (302).
